Europäisches Patentamt

European Patent Office

Office européen des brevets

(19)

(11) Numéro de publication: **0 076 771 B1**

(12) ## FASCICULE DE BREVET EUROPEEN

(45) Date de publication du fascicule du brevet:
16.01.85

(51) Int. Cl.⁴: **H 02 G 1/14**

(21) Numéro de dépôt: **82420141.2**

(22) Date de dépôt: **04.10.82**

(54) **Four de thermo-rétraction pour capots et manchons d'étanchéité.**

(30) Priorité: **05.10.81 FR 8119121**

(43) Date de publication de la demande:
**13.04.83 Bulletin 83/15**

(45) Mention de la délivrance du brevet:
**16.01.85 Bulletin 85/3**

(84) Etats contractants désignés:
**AT BE CH DE GB LI LU NL SE**

(56) Documents cités:
**DE - A - 2 059 362
US - A - 3 427 433
US - A - 4 163 117

PATENTS ABSTRACTS OF JAPAN, vol. 2, no. 53, 17 avril
1978, Section E, page 1012, E78;**

(73) Titulaire: **TREFICABLE PIRELLI, 1, rue des Usines
B.P. 13, F-94410 Saint Maurice (FR)**

(72) Inventeur: **Dubin, Philippe, 3, Allée A. Daudet Jonage,
F-69330 Meyzieu (FR)**

(74) Mandataire: **Pascaud, Claude et al, PECHINEY 28, rue de
Bonnel, F-69433 Lyon Cedex 3 (FR)**

ACTORUM AG

## Description

La présente invention concerne un four de thermorétraction pour capots et manchons d'étanchéité de câbles conducteurs, et notamment de câbles de télécommunications qui doivent être maintenus en pression d'air sec ou de gaz inerte.

Il est connu d'utiliser des manchons en polymères thermorétractables pour protéger des extrémités ou des raccordements de câbles électriques ou de câbles de télécommunications. On peut citer, en particulier, les brevets US-A Nos 3210460 et 3035113 et FR-A No 2287793.

Habituellement, le retrait thermique des capots ou manchons se fait au moyen d'un simple chalumeau à air chaud, dans lequel la source de chaleur est un gaz combustible (propane) ou une résistance électrique. Cependant, la rétraction obtenue par ce procédé n'est pas parfaitement homogène, elle est largement dépendante de l'habileté manuelle de l'opérateur; elle se révèle, de ce fait, inapplicable quand on exige que les capots ou manchons soient étanches vis-à-vis d'une surpression interne créée au sein du câble (cas des câbles téléphoniques pressurisés à 0,5 ou 1 bar).

L'objet de l'invention est un four de thermorétraction pour manchons d'étanchéité et capots de protection de câbles conducteurs et, notamment, de câbles de télécommunications enroulés ou non sur un touret ou allongés, four comportant une enceinte munie d'un couloir d'entrée pour le passage du câble et au moins une source de chaleur, caractérisé en ce que la source de chaleur est une source de chaleur par rayonnement et convection, ayant un maximum de rayonnement dans une longueur d'onde comprise entre 1 et 6 µm, et que le four comporte des moyens pour accélérer la convection et des moyens pour contrôler le flux thermique atteignant le câble.

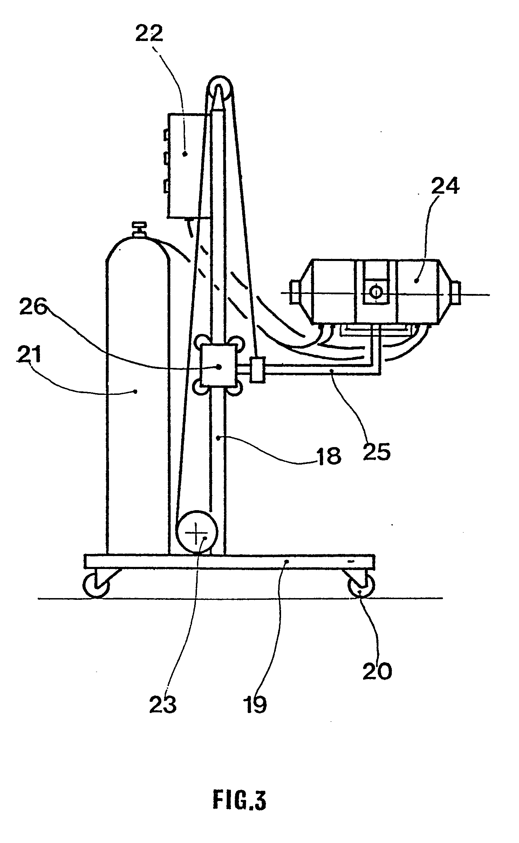

Les fig. 1 à 3 représentent un mode de réalisation de l'invention.

La fig. 1 représente une vue latérale, partiellement coupée de sa partie gauche, de l'ensemble de l'appareil.

La fig. 2 représente, en coupe transversale selon AA', l'enceinte de thermorétraction proprement dite.

La fig. 3 représente une vue d'ensemble de l'appareillage.

L'appareil est constitué par une enceinte métallique 1 sensiblement cylindrique et symétrique par rapport à un plan central AA' perpendiculaire à son axe.

La source de chaleur est constituée par deux éléments radiants 2 disposés face à face et symétriquement par rapport au plan central.

Cependant, il ne serait pas contraire à l'invention d'utiliser un seul élément radiant, de forme plane ou semi-cylindrique, éventuellement complété par un réflecteur thermique disposé symétriquement par rapport au câble, de façon à répartir plus uniformément le flux thermique.

Dans le cas représenté, les éléments radiants 2 sont des thermoréacteurs catalytiques comportant un support catalytique poreux 3 en céramique, des résistances électriques de démarrage 4 par préchauffage entre 250 et 300°C, un injecteur de combustible 5, pour propane ou butane par exemple, et une arrivée d'air, pulsé par le ventilateur 6, et filtré sur le filtre 7.

Bien qu'il soit théoriquement possible — et équivalent — d'utiliser des éléments radiants de natures diverses, par exemple à résistances électriques ou à radiateurs à infrarouge, il est apparu qu'il était particulièrement avantageux d'utiliser, comme source de chaleur, des panneaux radiants à catalyse, utilisant un gaz liquéfié — butane ou propane — et qui, outre une mise en service rapide et un passage quasi instantané de la position attente à la position plein régime, assurent à la fois un excellent équilibre entre le chauffage par rayonnement (environ 55%) et le chauffage par convection (environ 45%), et une sécurité parfaite dans les atmosphères pouvant comporter des solvants inflammables, ainsi qu'une absence de production de gaz nocifs (tels que CO), les seuls produits de combustion étant l'eau et le dioxyde de carbone. Ces éléments ont un maximum d'émission dans la gamme de longueurs d'onde comprise entre 1 et 6 µm et, de préférence, aux environs de 3 µm.

Du fait de la stabilité de la combustion catalytique, il n'est pas nécessaire de prévoir une mesure et un contrôle de température, la seule régulation portant sur la durée de l'opération de thermorétraction, dès le moment où le régime de combustion a été fixé.

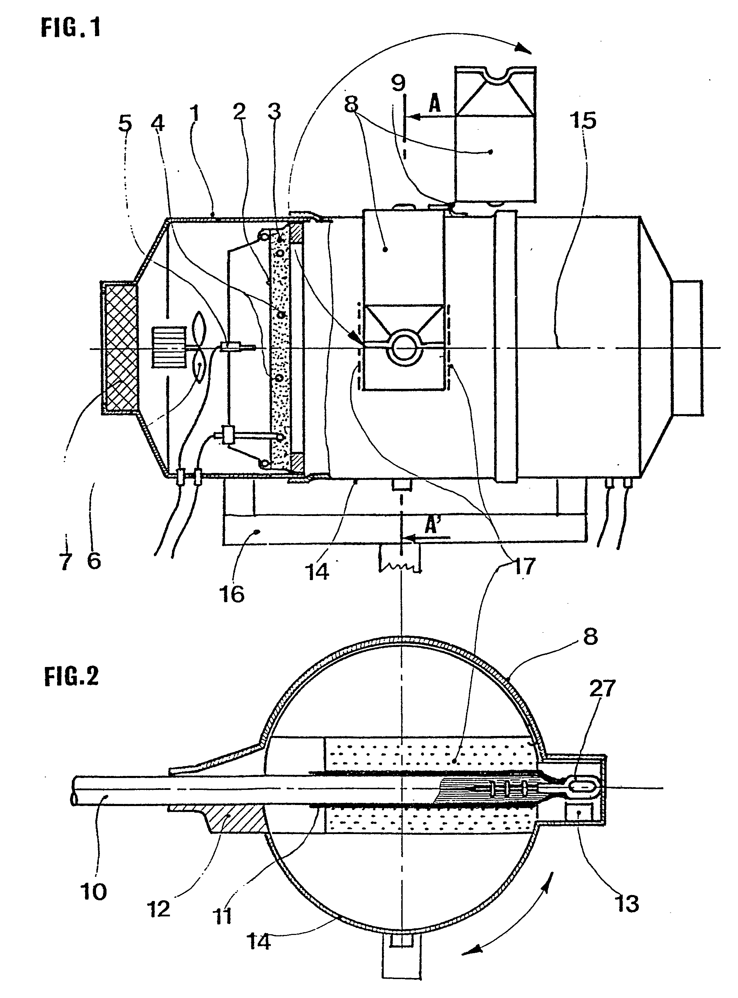

La partie centrale de l'appareil comporte une partie mobile 8 amovible par basculement autour d'une articulation 9, ce qui permet d'introduire le câble 10 muni préalablement de son manchon thermorétractable 11. Le câble s'appuie, à l'entrée, à gauche de la fig. 2, sur le couloir d'entrée 12 et, à l'extrémité qui est, de préférence, fermée, sur le support 13. Cette extrémité peut également être ouverte si on désire, par exemple, protéger par un manchon thermorétractable une épissure de câble.

La partie centrale de l'appareil 14 peut tourner d'un angle d'environ 90° (± 45° par rapport à l'horizontale) et même plus, si nécessaire, autour de l'axe 15 de l'enceinte, par rapport aux deux extrémités qui sont reliées entre elles par la traverse 16. Au cours de cette rotation, le couloir d'entrée 12 et le support d'extrémité 13 restent alignés et diamétralement opposés. De cette façon, le couloir d'entrée peut se positionner de la manière la plus favorable pour recevoir l'extrémité d'un câble enroulé sur un touret de grande dimension (diamètre de 1,5 à 2 m et même au-delà), selon que cette extrémité se présente par la partie inférieure ou la partie supérieure du touret.

De part et d'autre du câble à manchonner 10, et symétriquement, on a prévu deux grilles métalliques 17 solidaires de la partie centrale 14, dont le rôle est de réduire et de répartir plus uniformément le flux thermique provenant des éléments radiants 2.

L'ensemble de l'appareil peut être disposé sur une potence 18 montée sur un châssis 19 muni de roulettes 20, et qui sert également de support pour la bouteille de propane 21 et l'armoire électrique de commande 22 qui assure les séquences de démarrage du thermoréacteur, le passage en position d'attente ou de chauffage, et la durée des cycles de thermorétraction, en fonction de la nature et de l'épaisseur des manchons utilisés qui peuvent être mis en mémoire et programmés, ce qui assure un fonctionnement parfaitement sûr et reproductible; la potence 18 comporte un cabestan 23 pour le réglage en hauteur de l'ensemble du four de rétraction 24, qui est fixé par la traverse 25 à un dispositif à galets 26 coulissant sur la potence 18.

Le fonctionnement de l'appareil objet de l'invention est le suivant: l'extrémité du câble peut, tout d'abord, recevoir un clou de tirage 27, pièce métallique munie d'un œillet qui est destinée au déroulage et au tirage du câble lors de la pose. L'autre extrémité du câble reçoit alors, le plus souvent, un manchon d'étanchéité muni d'une valve destinée à la mise en pression du câble, sous air ou azote, à une pression de quelques centaines de millibars à 1 bar.

Le manchon thermorétractable 11 est généralement muni, par son fabricant, d'une couche d'adhésif thermofusible dit hot-melt sur sa face interne. Il est enfilé sur l'extrémité du câble à protéger, et cette extrémité est introduite dans le thermoréacteur, en même temps qu'on enclenche la séquence de chauffage. La durée de rétraction peut aller de 1 à 5 min selon la nature et l'épaisseur du manchon thermorétractable.

Lorsque l'extrémité du câble comporte un clou de tirage 27, ce dernier vient se positionner sur le support 13 où il n'est pas directement soumis au flux thermique provenant des éléments radiants 2. On peut, alors, soit préchauffer le clou 23 par exemple avec une flamme air-propane, soit prévoir, au niveau du support 13, un moyen de chauffage localisé, par exemple par résistance électrique.

L'utilisation du four de rétraction permet ainsi d'effectuer rapidement, avec une très faible consommation d'énergie (10 à 50 g de propane par manchon), et de façon sûre et reproductible, la thermorétraction des manchons d'extrémité de câbles, et ce d'autant plus aisément que l'appareil vient se positionner devant les tourets de câbles, dont le poids atteint souvent plusieurs tonnes et dont la manipulation demanderait beaucoup de précautions et entraînerait une perte de temps. De la même façon, il permet d'effectuer sur place la thermorétraction de manchons de protection d'épissures, raccords ou réparations de la gaine externe.

## Revendications

1. Four de thermorétraction pour manchons d'étanchéité et capots de protection de câbles conducteurs et, notamment, de câbles de télécommunications, enroulés sur un touret ou allongés, four comportant une enceinte (1) munie d'un couloir d'entrée (12) pour le passage du câble (10) et au moins une source de chaleur (2), caractérisé en ce que la source de chaleur est une source de chaleur par rayonnement et convection, ayant un maximum de rayonnement dans une longueur d'onde comprise entre 1 et 6 µm, et que le four comporte des moyens pour accélérer la convection et des moyens pour contrôler le flux thermique atteignant le câble.

2. Four de thermorétraction selon la revendication 1, caractérisé en ce que la source de chaleur (2) est constituée par au moins un élément assurant la combustion par catalyse d'un gaz, tel que le butane ou le propane, ou d'une vapeur de liquide combustible.

3. Four de thermorétraction selon l'une des revendications 1 ou 2, caractérisé en ce qu'il comporte une seule source de chaleur (2) disposée d'un côté du câble (10) et, symétriquement par rapport au câble (10), un réflecteur de chaleur.

4. Four de thermorétraction selon l'une des revendications 1 ou 2, caractérisé en ce qu'il comporte deux sources de chaleur (2) disposées de façon symétrique par rapport au câble (10).

5. Four de thermorétraction selon l'une des revendications 1 à 4, caractérisé en ce que le moyen d'accélérer la convection est un ventilateur (6) disposé à l'arrière de la source de chaleur (2).

6. Four de thermorétraction selon l'une des revendications 1 à 5, caractérisé en ce que le moyen de contrôle du flux thermique est constitué par du grillage métallique (17) ou de la toile métallique perforée, disposés entre le câble (10) et la source de chaleur (2).

7. Four de thermorétraction selon l'une des revendications 1 à 6, caractérisé en ce qu'il comporte un moyen pour orienter le couloir d'entrée (12) en fonction de la position du câble (10).

## Patentansprüche

1. Ofen zur Wärmeschrumpfung für Dichtungsmuffen oder Schutzkappen für auf eine Kabeltrommel aufgewickelte oder langgestreckte leitende Kabel, insbesondere Fernmeldekabel, mit einem Gehäuse (1) einschliesslich einer Einlassrinne (12) für den Durchtritt des Kabels (10) und wenigstens einer Wärmequelle (2), dadurch gekennzeichnet, dass die Wärmequelle eine Wärmequelle mit Strahlung und Konvektion ist und ein Strahlungsmaximum bei einer Wellenlänge von 1 bis 6 µm hat, und dass der Ofen eine Einrichtung zur Beschleunigung der Konvektion und eine Einrichtung zur Kontrolle des das Kabel erreichenden Wärmestroms aufweist.

2. Ofen zur Wärmeschrumpfung nach Anspruch 1, dadurch gekennzeichnet, dass die Wärmequelle (2) aus wenigstens einem Element besteht, das die durch Katalyse erfolgende Verbrennung eines Gases, etwa Butan oder Propan, oder eines brennbaren Flüssigkeitsdampfs gewährleistet.

3. Ofen zur Wärmeschrumpfung nach Anspruch 1 oder 2, gekennzeichnet durch eine auf einer Seite des Kabels (10) angeordnete einzige Wärmequelle (2) und durch einen zum Kabel (10) symmetrischen Wärmereflektor.

4. Ofen zur Wärmeschrumpfung nach Anspruch 1 oder 2, gekennzeichnet durch zwei zum Kabel (10) symmetrische Wärmequellen (2).

5. Ofen zur Wärmeschrumpfung nach einem der Ansprüche 1 bis 4, dadurch gekennzeichnet, dass die Einrichtung zur Beschleunigung der Konvektion ein hinter der Wärmequelle (2) angeordneter Ventilator (6) ist.

6. Ofen zur Wärmeschrumpfung nach einem der Ansprüche 1 bis 5, dadurch gekennzeichnet, dass die Einrichtung zur Kontrolle des Wärmestroms aus einem Metallgitter (17) oder einem perforierten Metallblech besteht, das zwischen dem Kabel (10) und der Wärmequelle (2) angeordnet ist.

7. Ofen zur Wärmeschrumpfung nach einem der Ansprüche 1 bis 6, gekennzeichnet durch eine Einrichtung zur Ausrichtung der Einlassrinne (12) in Abhängigkeit von der Stellung des Kabels (10).

**Claims**

1. A thermo-retraction oven for sealing sleeves and protection caps for conductor cables and in particular telecommunication cables, which are wound on a reel or which are of elongate form, the oven comprising an enclosure (1) provided with an intake duct (12) for the cable (10) to pass therethrough, and at least one heat source (2), characterised in that the heat source is a radiant and convection heat source, having a radiation maximum in a wavelength of between 1 and 6 µm, and that the oven comprises means for accelerating convection and means for controlling the thermal flux that reaches the cable.

2. A thermo-retraction oven according to claim 1, characterised in that the heat source (2) comprises at least one element providing for combustion by catalysis of a gas such as butane or propane or a combustible liquid vapour.

3. A thermo-retraction oven according to claim 1 or claim 2, characterised in that it comprises a single heat source (2) disposed at one side of the cable (10) and, symmetrically with respect to the cable (10), a heat reflector.

4. A thermo-retraction oven according to claim 1 or claim 2, characterised in that it comprises two heat sources (2) disposed symmetrically with respect to the cable (10).

5. A thermo-retraction oven according to any one of claims 1 to 4, characterised in that the convection accelerating means is a fan (6) disposed at the rear of the heat source (2).

6. A thermo-retraction oven according to any one of claims 1 to 5, characterised in that the thermal flux controlling means comprises metal gridding (17) or perforated metal gauze, disposed between the cable (10) and the heat source (2).

7. A thermo-retraction oven according to any one of claims 1 to 6, characterised in that it comprises a means for orienting the intake duct (12) in dependence on the position of the cable (10).

**FIG.1**

**FIG.2**

**FIG.3**